# EUROPEAN PATENT APPLICATION

(11) **EP 4 826 023 A1**
(43) Date of publication of application: **21.10.2026**
(21) Application number: 24904156.7
(22) Date of filing: 04.12.2024
(51) Int. Cl.: C22C 38/02, C22C 38/06, C22C 38/04, C22C 38/00, C22C 38/58, C22C 38/44, C22C 38/14, C21D 8/02

(54) **COLD-ROLLED STEEL SHEET, HOT-DIP GALVANIZED STEEL SHEET, AND METHOD FOR MANUFACTURING THEREOF**

(30) Priority: 15.12.2023 KR 20230183871
(71) Applicant: POSCO Co., Ltd, Gyeongsangbuk-do 37859 (KR)
(72) Inventor: CHO, Won-Tae, Gwangyang-si, Jeollanam-do 57807 (KR); CHO, Hang-Sik, Gwangyang-si, Jeollanam-do 57807 (KR); JUNG, Ki-Taek, Gwangyang-si, Jeollanam-do 57807 (KR); SEO, Chang-Hyo, Gwangyang-si, Jeollanam-do 57807 (KR); PARK, Man-Young, Gwangyang-si, Jeollanam-do 57807 (KR); CHOI, Chang-Sik, Gwangyang-si, Jeollanam-do 57807 (KR)
(74) Representative: Meissner Bolte Partnerschaft mbB
(86) International application number: PCT/KR2024/019678
(87) International publication number: WO 2025/127591

(57) **Abstract**

One aspect of the present invention provides a cold-rolled steel sheet and a hot-dip galvanized steel sheet, each having high strength and excellent formability and suitable for automotive materials, and a method for manufacturing same.

## Description

### Technical Field

The present disclosure relates to a steel sheet suitable for an automotive material, and more particularly, to a high-strength cold-rolled steel sheet and a hot-dip galvanized steel sheet, each having excellent formability, and a method for manufacturing the same.

### Background Art

Recently, efforts have been made to secure technologies capable of manufacturing steel sheets having high strength in order to reduce a weight of automobile. Among these, high-strength steel sheets for cold forming with formability may improve productivity, and thus are excellent in terms of economic efficiency, and are also more advantageous in terms of the safety of final components. In particular, since steel sheets having high tensile strength TS have a high load-bearing capacity until fracture occurs, the demand for AHSS steel materials having a tensile strength of 590 MPa or more is increasing.

Accordingly, various attempts have been made to improve the strength of steel materials; however, when the strength is simply increased, there is a drawback in that formability may be deteriorated.

As a method for improving formability of steel materials, a method of increasing elongation has been applied. In particular, a method for using a transformation induced plasticity (TRIP) phenomenon by introducing a retained austenite phase into steel has been widely used. However, in the case of TRIP steel, in order to introduce the retained austenite, it is common to add large amounts of elements such as Si, Mn, and Al to the steel; however, steels containing these elements have a problem in that, during an annealing heat treatment process, the elements form oxides on the steel surface, thereby deteriorating plating properties and causing plating peeling.

### Summary of Invention

### Technical Problem

An aspect of the present disclosure is to provide a high-strength cold-rolled steel sheet with excellent formability, a hot-dip galvanized steel sheet, and a method for manufacturing same.

The technical problems of the present disclosure are not limited to the above description. Those skilled in the art to which the present disclosure pertains will have no difficulty in understanding additional technical problems of the present disclosure from the general contents of the present specification.

### Solution to Problem

According to an aspect of the present disclosure, a cold-rolled steel sheet includes by wt%, carbon (C): 0.080 to 0.30%, silicon (Si): 0.50 to 2.3%, aluminum (Al): 0.0030 to 2.0% or less, manganese (Mn): 1.0 to 3.5%, phosphorus (P): 0.0400% or less (excluding 0%), sulfur (S): 0.0100% or less (excluding 0%), and nitrogen (N): 0.01000% or less (excluding 0%), and a balance of Fe and unavoidable impurities, in which a microstructure includes 5 to 25 area% of retained austenite and 25 to 90% of a hard phase, with a balance of Ferrite, the hard phase includes at least one of bainite and martensite, and an area fraction of the hard phase having an R value of 4.0 or higher derived by the following [Relational Equation 1] exceeds 60 area% of a total area fraction of the hard phase. [Relational Equation 1] 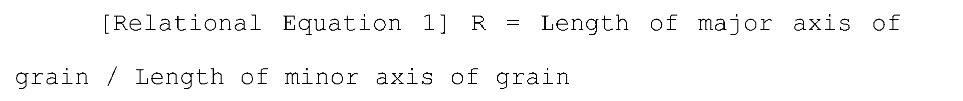 R = Length of major axis of grain/Length of minor axis of grain

The steel sheet may include, by wt%, at least one of niobium (Nb), chromium (Cr), nickel (Ni), and molybdenum (Mo) in an amount of 2.0 wt% or less (excluding 0%).

The steel sheet may further include at least one of titanium (Ti) of 0.050 wt% or less (excluding 0%), and boron (B) of 0.003000 wt% or less (excluding 0%).

A tensile strength (TS) may be 590 MPa or more, and a product TS x T-El of the tensile strength and total elongation may be 23,000 or more.

According to still another aspect of the present disclosure, in a hot-dip galvanized steel sheet, a zinc-based plating layer may be formed on at least one surface of the cold-rolled steel sheet.

According to still another aspect of the present disclosure, in an alloyed hot-dip galvanized steel sheet, an alloyed zinc-based plating layer may be formed on at least one surface of the cold-rolled steel sheet.

According to another aspect of the present disclosure, a method for manufacturing a cold-rolled steel sheet includes heating a steel slab including, by wt%, carbon (C): 0.080 to 0.30%, silicon (Si): 0.50 to 2.3%, aluminum (Al): 0.0030 to 2.0% or less, manganese (Mn): 1.0 to 3.5%, phosphorus (P): 0.0400% or less (excluding 0%), sulfur (S): 0.0100% or less (excluding 0%), and nitrogen (N): 0.01000% or less (excluding 0%), and a balance of Fe and unavoidable impurities; obtaining a hot-rolled steel sheet by finish hot rolling the steel slab after the heating; after the finish hot rolling, coiling the hot-rolled steel sheet at a temperature of 100°C or higher and Ms or lower, and then air cooling the hot-rolled steel sheet; cold rolling the hot-rolled steel sheet with a cumulative reduction ratio of 10% or more and 31% or less to obtain a cold-rolled steel sheet; continuously annealing the cold-rolled steel sheet at a temperature of 750°C or higher and less than Ae3°C; after the continuous annealing, cooling the cold-rolled steel sheet to a temperature range of 200 to 500°C at a cooling rate of 10°C/s or higher and 150°C/s or lower; and reheating the cold-rolled steel sheet to 300 to 560°C and then performing over-aging heat treatment for 0.5 minutes or more.

The steel sheet may include, by wt%, at least one of niobium (Nb), chromium (Cr), nickel (Ni), and molybdenum (Mo) in an amount of 2.0 wt% or less (excluding 0%).

The steel sheet may further include at least one of titanium (Ti) of 0.050 wt% or less (excluding 0%), and boron (B) of 0.003000 wt% or less (excluding 0%).

The heating may be performed in a temperature range of 1100 to 1300°C, and the finish hot rolling may be performed in a temperature range of 850 to 1000°C.

The method for manufacturing a hot-dip galvanized steel sheet described above may further include, after the over-aging heat treatment, immersing the cold-rolled steel sheet in a molten zinc plating bath at 450 to 500°C to obtain a hot-dip galvanized steel sheet.

The method for manufacturing an alloyed hot-dip galvanized steel sheet described above may include performing alloying heat treatment on the hot-dip galvanized steel sheet at 480 to 550°C.

The method may further include after completing the alloying heat treatment, performing temper rolling. Advantageous Effects of Invention

According to an aspect of the present disclosure, it is possible to provide a high-strength cold-rolled steel sheet and a hot-dip galvanized steel sheet, each having excellent formability and being suitable for automotive materials, as well as a method for manufacturing the same.

In addition, according to an aspect of the present disclosure, it is possible to provide a method for manufacturing a high-strength cold-rolled steel sheet with excellent formability without excessively adding expensive elements.

### Brief Description of Drawings

FIG. 1 is a diagram schematically illustrating an R value defined in an example embodiment of the present disclosure.
FIG. 2 is an SEM image showing a tempered martensite structure with fine carbides precipitated after coiling.
FIG. 3 is an SEM image showing a microstructure of Example 4.
FIG. 4 is an SEM image obtained by observing a microstructure of Comparative Example 7.

### Best Mode for Invention

Hereinafter, exemplary embodiments of the present disclosure will be described. However, example embodiments of the present disclosure may be modified in several other forms, and the scope of the present disclosure is not limited to example embodiments to be described below.

In this specification, the term "including" is used to indicate the inclusion of other components, rather than excluding other components, unless specifically stated otherwise.

In addition, unless otherwise specified in the present specification, the unit '%' means weight%.

The inventors of the present disclosure conducted in-depth research to provide a steel sheet suitable for automotive materials, which not only has high strength but also exhibits excellent formability by improving ductility, and also has excellent plating properties.

As a result, by optimizing the alloy composition system and manufacturing conditions of the steel sheet, it was confirmed that a steel sheet having a microstructure advantageous for securing target physical properties could be provided, leading to the completion of the present disclosure.

Hereinafter, a cold-rolled steel sheet according to an example embodiment of the present disclosure will be described in detail.

According to an example of the present disclosure, the cold-rolled steel sheet may include, by wt%, carbon (C): 0.080 to 0.30%, silicon (Si): 0.50 to 2.3%, aluminum (Al): 0.0030 to 2.0% or less, manganese (Mn): 1.0 to 3.5%, phosphorus (P): 0.0400% or less (excluding 0%), sulfur (S): 0.0100% or less (excluding 0%), and nitrogen (N): 0.01000% or less (excluding 0%), and a balance of Fe and unavoidable impurities.

Hereinafter, the reasons for limiting the alloy composition of the steel sheet provided by the present disclosure as described above will be described in detail.

### Carbon (C): 0.080 to 0.30%

Carbon (C) is an element effective for strengthening steel, and in the present disclosure, is an important element added to stabilize retained austenite and secure strength. To obtain the above-described effects, the carbon (C) is added in an amount of 0.080% or more, but if the content exceeds 0.30%, the risk of occurrence of slab defects increases. Furthermore, when the content exceeds 0.30%, problems may arise in that arc weldability and laser weldability deteriorate, the risk of weld cracking due to low-temperature brittleness increases, and hole expansion property deteriorates. Therefore, in an example of the present disclosure, the C content of the cold-rolled steel sheet may be 0.080 to 0.30%, in another example, the C content may be 0.10 to 0.12%, and in still another example, 0.18 to 0.24%.

### Silicon (Si): 0.50 to 2.3%

Silicon (Si) is an element that suppresses the precipitation of carbides within ferrite and promotes the diffusion of carbon within ferrite into austenite, thereby contributing to the stabilization of the retained austenite. When the Si content is less than 0.50%, there is a concern that the retained austenite phase in the steel will be insufficient, resulting in reduced ductility. On the other hand, when the content exceeds 2.3%, physical properties of a welded portion may deteriorate due to the formation of LME cracks, and surface characteristics and plating properties of steel may deteriorate. Therefore, in an example of the present disclosure, the Si content may be 0.50 to 2.3%. More specifically, the Si content may be 1.2 to 1.6%.

### Aluminum (Al): 0.0030 to 2.0%

Aluminum (Al) is an element that combines with oxygen in the steel to perform deoxidation. To this end, it is preferable to maintain its content at 0.0030% or more. In addition, like the Si, Al contributes to the stabilization of the retained austenite by suppressing the formation of carbides within the ferrite. When the content of Al exceeds 2.0%, it becomes difficult to manufacture a sound slab through reaction with mold flux during casting, and there is also a problem of hindering plating properties by forming surface oxides. Therefore, in the present disclosure, the Al content may be 0.0030 to 2.0%, and in another example embodiment, the Al content may be 0.15 to 0.30%.

### Manganese (Mn): 1.0 to 3.5%

Manganese (Mn) is an element effective in controlling ferrite transformation while forming and stabilizing retained austenite. When the Mn content is less than 1.0%, a large amount of ferrite transformation occurs, making it difficult to secure the target strength. On the other hand, when the Mn content exceeds 3.5%, the phase transformation is delayed too much during the annealing heat treatment step, resulting in the formation of a large amount of martensite structure, making it difficult to secure the intended ductility. Accordingly, in the present disclosure, the Mn content may be limited to 1.0 to 3.5%. In another example embodiment, the Mn content may be 1.5 to 2.0%.

### Phosphorus (P): 0.0400% or less (excluding 0%)

Phosphorus (P) is an impurity inevitably present within steel, and is preferably controlled to as low a level as possible; however, it may also be intentionally added to increase the strength of steel. However, since the excessive P content degrades the toughness of the steel, the present disclosure limits the P to 0.0400% or less. More advantageously, the P content may be 0.0200% or less, more preferably 0.0150% or less, with 0% excluded considering the level that is inevitably added.

### Sulfur (S): 0.0100% or less (excluding 0%)

Sulfur (S) is an impurity inevitably contained within steel, so it is advantageous to control its content to the lowest possible level. In addition, if the S content is excessive, there is a risk that the ductility and impact properties of steel may be inferior. Considering this, the present disclosure may include the S in an amount of 0.0100% or less. More advantageously, the S content may include 0.00800% or less, and even more advantageously, 0.00500% or less, with 0% excluded considering the level that is inevitably added.

### Nitrogen (N): 0.01000% or less (excluding 0%)

Nitrogen (N) is an impurity inevitably contained within steel. When the N content exceeds 0.01000%, it may combine with Al in steel to form AlN, thereby potentially impairing continuous casting quality. Therefore, the N may be included in an amount of 0.01000% or less, more advantageously 0.007000% or less, and even more advantageously 0.005000% or less.

The cold-rolled steel sheet according to an example embodiment of the present disclosure may additionally include the following components in addition to the components described above.

The cold-rolled steel sheet according to an example of the present disclosure may include at least one of niobium (Nb), chromium (Cr), nickel (Ni), and molybdenum (Mo) in an amount of 2.0 wt% or less (excluding 0%).

The Nb, Cr, Ni, and Mo are elements that increase the strength of steel. The elements are advantageous for increasing the strength and hardenability of steel, but when their content is excessive, there is a problem in that the target strength is exceeded, and manufacturing costs increase significantly due to the high cost of these elements. Therefore, the cold-rolled steel sheet according to an example embodiment of the present disclosure may contain at least one of the Nb, Cr, Ni, and Mo in a total amount of 0.20% or less.

In addition, the cold-rolled steel sheet may additionally include at least one of titanium (Ti) in an amount of 0.050 wt% or less (excluding 0%) and boron (B) in an amount of 0.003000 wt% or less (excluding 0%).

The boron (B) plays a role in increasing the hardenability of steel by segregating in an elemental state at the grain boundaries within steel. When the B content exceeds 0.003000%, it forms BC precipitates at the grain boundaries, which actually leads to a problem of worsening hardenability.

Therefore, when adding the B, it may be included in an amount of 0.003000% or less. However, in order to sufficiently obtain the effect of improving hardenability by the addition of B, it may be included in an amount of 0.0002000% or more, and more advantageously, 0.001300% or more.

Meanwhile, when B is added along with Ti, if the B content is 0.0002000% or more, it is advantageous to add Ti in an amount of 0.015% or more. This is to sufficiently obtain the effect of B; since the effect of B may not be obtained when the B combines with N within steel and is lost as BN, it is advantageous to induce the precipitation of TiN by adding Ti in an amount greater than a certain amount. However, when the Ti content exceeds 0.050%, defects such as nozzle clogging may occur due to the formation of coarse TiN, which may lead to a decrease in continuous casting performance.

The remaining component of the present disclosure is iron (Fe). However, since the unintended impurities from raw materials or the surrounding environment may inevitably be mixed in a normal manufacturing process, the unintended impurities may not be excluded. Since these impurities are known to those skilled in the ordinary manufacturing process, not all of them are specifically mentioned in this specification.

The cold-rolled steel sheet according to an example embodiment of the present disclosure may have a microstructure including 5 to 25 area% of retained austenite and 25 to 90 area% of a hard phase, with a balance of Ferrite. In this case, the hard phase may include at least one of bainite and martensite.

In the present disclosure, the retained austenite is an important structure for ensuring ductility. Therefore, the cold-rolled steel sheet according to an example of the present disclosure may include 5 area% or more of retained austenite to ensure excellent ductility. However, when the area fraction of retained austenite becomes excessively high, resistance to delayed fracture may deteriorate. As a result, an example embodiment of the present disclosure may set the upper limit of the area fraction of the retained austenite to 25 area%. In another example, the area fraction of the retained austenite may be 10 to 15 area%, and in still another example, 16 to 18 area%.

In a non-limiting example, the retained austenite may be acicular. Previously, in order to secure a certain level of retained austenite, it was necessary to add a large amount of austenite-stabilizing alloying elements, such as carbon, into the steel, resulting in the problems of increased costs and reduced weldability. However, according to an example of the present disclosure, when the retained austenite is acicular, the stability of austenite may be significantly increased even with the same chemical composition. Thus, an appropriate level of retained austenite may be secured without including a large amount of austenite-stabilizing alloying elements.

In addition, the cold-rolled steel sheet according to an example embodiment of the present disclosure may include a hard phase of 25 to 90 area% in its microstructure, and the hard phase may include at least one of bainite and martensite. In this case, the term martensite may include both fresh martensite and tempered martensite.

That is, the cold-rolled steel sheet according to an example of the present disclosure may secure high strength by including the hard phase of 25 area% or more. On the other hand, when the hard phase becomes excessively large, a problem of reduced ductility may occur. As a result, the cold-rolled steel sheet according to an example of the present disclosure may limit the area fraction of the hard phase to 90 area% or less. In another example, the hard phase may be included in an area% of 40 to 60 percent, and in still another example, may be included in an area% of 65 to 75 percent.

In particular, as a non-limiting example, most of the bainite and martensite structures included in the hard phase may be acicular.

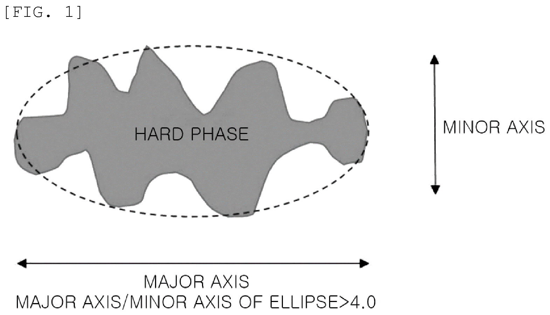

More specifically, in the cold-rolled steel sheet according to an example embodiment of the present disclosure, the area fraction of the hard phase having an R value of 4.0 or higher derived by the following [Relational Equation 1] may exceed 60% with respect to the total area fraction of the hard phase. FIG. 1 schematically illustrates the R value defined in an example embodiment of the present disclosure. [Relational Equation 1] 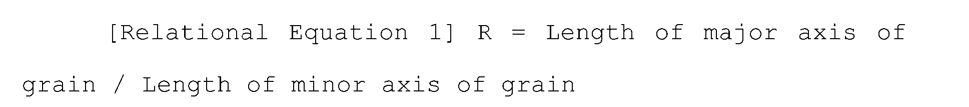 R = Length of major axis of grain / Length of minor axis of grain

When the area fraction of the hard phase having an R value of 4.0 or higher exceeds 60% with respect to the total area, the grain size may be maintained small overall, thereby suppressing the propagation of cracks within the cold-rolled steel sheet. Furthermore, since the bainite and martensite structures included in the hard phase form boundaries with surrounding ferrite and retained austenite, maintaining a small grain size as described above induces carbon diffusion into austenite during the over-aging period, thereby ensuring the stability of the retained austenite. As a result, since the high ductility and high strength of the steel material may be secured simultaneously, the area fraction of the hard phase having an R value of 4.0 or higher may be set to more than 60 area%. Since it is advantageous for achieving the objective of the present disclosure as the area fraction of the acicular hard phase having an R value of 4.0 or higher increases, the upper limit of the area fraction of the acicular hard phase is not separately limited. However, considering that some recrystallization may inevitably occur during the annealing heat treatment, the upper limit of the area fraction of the acicular hard phase may be set to 99 area%. In another example embodiment, the area fraction of the hard phase may be 60 to 85 area% or 70 to 75 area%.

The microstructure of the cold-rolled steel sheet according to an example of the present disclosure may be composed of a balance of Ferrite. In this case, the ferrite may include both coarse polygonal ferrite and acicular ferrite. As a non-limiting example, the ferrite may be included in the cold-rolled steel sheet in an area of 10 to 80% to ensure excellent ductility and strength, but is not necessarily limited thereto.

The microstructure, excluding the above-described ferrite, retained austenite, bainite, and martensite phases, may contain precipitates of tens of nanometers. However, since the formation of the pearlite phase is highly disadvantageous in terms of ensuring ductility, it is necessary to suppress the formation of such pearlite phases as much as possible. More specifically, the area fraction of the pearlite phase may be 3% or less.

The steel sheet of the present disclosure, composed of the microstructure described above, is characterized by high strength and high formability. Specifically, the steel sheet may have a tensile strength (TS) of 590 MPa or more, a total elongation (T-El) of 20% or more, and a product of tensile strength and total elongation (TS x T-El) of 23,000 or more.

Meanwhile, the steel sheet of the present disclosure may be the cold-rolled steel sheet, the hot-dip galvanized steel sheet in which a zinc-based plating layer is formed on at least one surface of the cold-rolled steel sheet, or the alloyed hot-dip galvanized steel sheet obtained by alloying the hot-dip galvanized steel sheet.

Although not specifically limited, the zinc-based plating layer may be a zinc plating layer containing mainly zinc, or a zinc alloy plating layer containing aluminum and/or magnesium in addition to zinc.

Hereinafter, a method for manufacturing a cold-rolled steel sheet provided by the present disclosure, which is another aspect of the present disclosure, will be described in detail.

Briefly, the present disclosure may manufacture a steel sheet of the targeted type through the process of [heating of steel slab - hot rolling - coiling and air cooling - cold rolling - annealing - cooling - over-aging heat treatment].

The conditions for each step will be described in detail below.

### [Heating of Steel Slab]

First, the steel slab satisfying all the above-described alloy composition systems is prepared and then heated. This process is intended to facilitate the subsequent hot rolling process and to sufficiently obtain the target physical properties of the steel sheet.

The heating process may be performed within a temperature range of 1100 to 1300°C. When the heating temperature is below 1100°C, the friction between the steel sheet and the rolling mill increases, causing a problem where the load applied to the rollers during hot rolling increases rapidly. On the other hand, when the temperature exceeds 1300°C, not only does the energy cost required to raise the temperature increase, but the amount of surface scale also increases, which may lead to material loss.

Accordingly, the heating process may be performed within a temperature range of 1100 to 1300°C. More advantageously, it may be performed at 1170°C or higher, 1180°C or higher, and at 1230°C or lower, 1220°C or lower.

### [Hot Rolling]

A hot-rolled steel sheet may be obtained by hot rolling the steel slab heated according to the above description. In this case, the finish hot rolling may be performed in a temperature range of 850 to 1000°C.

By performing the finish hot rolling in the above-described temperature range, the effect of simultaneously improving the rigidity and formability of the steel sheet may be obtained. However, when the temperature is below 850°C, there is a problem where the rolling load increases and shape defects increase, leading to poor productivity. On the other hand, when the temperature exceeds 1000°C, the surface quality becomes inferior due to an increase in oxides caused by excessive high-temperature operation.

Therefore, during the hot rolling, the finish hot rolling may be performed in a temperature range of 850 to 1000°C. More advantageously, this may be performed at 890°C or higher, or within a temperature range of 950°C or lower and 930°C or lower.

### [Coiling and Air Cooling]

The hot-rolled steel sheet manufactured according to the above description may be coiled, and this may be done after rapid cooling to the coiling temperature. Preferably, it may be cooled to a temperature of 100°C or higher and Ms°C or lower at a cooling rate of 20 to 100°C/s. In this case, the Ms temperature may be verified by inputting the steel grade components using the commercial program J-mat pro. In the present disclosure, in JMatPro ver. 13.1, the Ms value derived by setting an austenitization temperature of 1000°C and a grain size of 30 µm for high-temperature austenite prior to cooling, in consideration of the hot rolling temperature, was used as a reference.

When the cooling rate is less than 20°C/s when cooling to the coiling temperature, there is a disadvantage in that hot rolling productivity decreases and a cooling medium with low cooling capacity should be intentionally adopted during actual production. On the other hand, when the cooling rate exceeds 100°C/s, the temperature variation within steel becomes uneven, leading to problems such as poor shape and excessively high strength.

After the cooling, the method for manufacturing a cold-rolled steel sheet according to an example of the present disclosure may perform a coiling process on the hot-rolled steel sheet and perform air cooling. By doing so, the method for manufacturing a cold-rolled steel sheet according to an example of the present disclosure may form a martensite phase within steel at an appropriate level. In this case, the area fraction of the formed martensite phase may be 80% or more. In this way, the martensite phase formed during the coiling process transforms into fine acicular austenite and ferrite during the subsequent annealing process, which may play a favorable role in improving the ductility and strength of the steel.

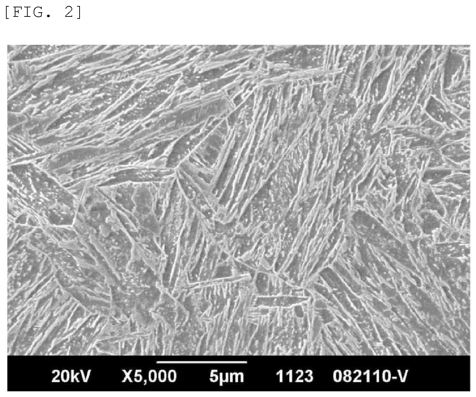

In addition, as a non-limiting example, the above-described coiling may be performed in a temperature range of 100°C or higher and Ms°C or lower. That is, in an example embodiment of the present disclosure, by performing coiling in a temperature range of 100°C or higher and Ms°C or lower, the martensite structure of the hot-rolled steel sheet may be sufficiently secured while softening the martensite structure to enable the subsequent cold rolling process. Furthermore, the martensite formed according to the above description may undergo a tempering process during coiling and have a microstructure in which fine carbides are precipitated. FIG. 2 is an SEM image showing a martensite structure in which fine carbides are precipitated in this way.

When the coiling temperature is less than 100°C, the hot-rolled steel sheet obtained after coiling has low ductility and inferior impact properties, which may cause the sheet to burst or tear during the cold rolling process. On the other hand, when the above-described coiling temperature exceeds Ms°C, the martensite phase is not sufficiently formed, and thus the desired improvement in ductility and strength may not be achieved.

According to another example embodiment, the above-described coiling winding temperature may be (Ms-50)°C to (Ms-10)°C, and according to still another example embodiment, may be (Ms-150)°C to (Ms-100)°C.

### [Cold Rolling]

In general, the cold rolling reduction ratio during the cold rolling for obtaining the cold-rolled steel sheet is typically more than 31%. However, in a non-limiting example embodiment of the present disclosure, the cold rolling may be performed with a reduction ratio of 31% or less so that the martensite structure formed during the coiling process is not destroyed during the subsequent annealing process, and fine acicular austenite and ferrite may be formed along the martensite interface. When the cold rolling reduction ratio exceeds 31%, the recrystallization driving force becomes greater than the transformation driving force, and as the hot-rolled structure is destroyed, coarse austenite and ferrite are ultimately formed, resulting in a problem of inferior formability. More specifically, when the reduction ratio during the cold rolling is excessively high, a large number of dislocations are introduced into the tempered martensite formed during the hot rolling, and a phenomenon in which the austenite reverse transformation, referred to as mechanical stabilization, is delayed may occur during subsequent annealing heat treatment. As a result, in the subsequent continuous annealing process, austenite reverse transformation may not occur up to the high temperature range exceeding 700°C, and since the recrystallization of the acicular martensite microstructure formed during the hot rolling occurs preferentially, the acicular structure may not remain after continuous annealing. Consequently, the area fraction of the hard phase having an R value of 4.0 or more, which is intended in the present disclosure, may not be secured to exceed 60 area%.

On the other hand, for shape correction after coiling, the method for manufacturing the cold-rolled steel sheet according to an example of the present disclosure may have a cold rolling reduction ratio of 10% or more. This allows the cold-rolled steel sheet to be easily passed through during subsequent annealing. Specifically, the cold rolling reduction ratio may be measured based on an SPM or tension leveler equipment used for shape correction during the cold rolling process or prior to the cold rolling process.

As another example, the cold rolling reduction ratio may be 14 to 21%, and as still another example, may be 21 to 25%.

### [Annealing]

The cold-rolled steel sheet obtained according to the above description may be subjected to annealing treatment. As an example, this may be performed by a continuous annealing process, but is not limited thereto, and any known annealing method may be used.

The annealing process is intended to raise the temperature of the steel sheet to the austenite transformation temperature or higher to form an austenite phase in a sufficient fraction and to induce carbon diffusion into this austenite.

The present disclosure may perform the annealing of the cold-rolled steel sheet in a temperature range of 750°C or higher and less than Ae3°C. In the present disclosure, the Ae3 was derived in Jmat pro ver. 13.1 version by considering the hot rolling temperature, inputting an austenitization temperature of 1000°C and a grain size of 30µm for high-temperature austenite before cooling. When the annealing temperature is less than 750°C, the sufficient transformation into austenite does not occur, and consequently, the martensite and bainite phases may not be secured to the target level after the annealing is completed. On the other hand, when the temperature exceeds Ae3°C, coarse austenite is formed, thereby destroying the acicular structure, and the fraction of ferrite microstructure required to ensure ductility becomes insufficient, which may result in deterioration of ductility.

As another example, the annealing temperature may be (Ae3-30)°C to (Ae3-10)°C, and as still another example, may be (Ae3-60)°C to (Ae3-40)°C.

### [Cooling and Maintaining]

The cold-rolled steel sheet annealed according to the above description may be cooled. In this case, a holding process may be performed after cooling to a temperature range of 200 to 500°C, which is the temperature range where the transformation of the bainite and martensite phases occurs. Preferably, the cold-rolled steel sheet may be cooled to a temperature range of 200 to 500°C at a cooling rate of 10°C/s or more and 150°C/s or less, then reheated to a temperature range of 300 to 560°C, and then subjected to over-aging heat treatment for 0.5 minutes or more.

That is, the method for manufacturing the cold-rolled steel sheet according to an example of the present disclosure may first cool the cold-rolled steel sheet to a temperature range of 200 to 500°C at a cooling rate of 10°C/s or higher and 150°C/s or less after the continuous annealing.

When the cooling end temperature exceeds 500°C, the amount of bainite transformation may be insufficient, which may be disadvantageous for securing the retained austenite fraction, and the formation of a pearlite phase may lead to the deterioration in ductility. On the other hand, when cooling is performed below 200°C, the temperature variation within the plate increases, and an excessive amount of martensite phase, which has a very fast transformation rate, may be introduced. As another example, the cooling end temperature may be 275 to 325°C, and as still another example, may be 375 to 425°C.

In addition, when cooling within the-described temperature range, it is advantageous to perform the cooling at a critical cooling rate that minimizes the formation of ferrite, pearlite, etc., during the cooling process; in the present disclosure, a cooling rate of 10°C/s or higher may be applied for this purpose. When the cooling rate is less than 10°C/s, even if the target cooling temperature is reached, high-temperature phase transformation phases such as ferrite and pearlite may be generated during cooling, making it difficult to secure high-strength characteristics. On the other hand, when the cooling rate becomes excessively high, excessive supercooling occurs, thereby increasing the temperature deviation in the width direction of the plate. This may result in shape defects due to differences in the fraction of hard phase introduced in the width direction. Therefore, in the manufacturing method according to one embodiment of the present disclosure, the upper limit of the cooling rate may be set to 150°C/s. In another example, the cooling rate may be 15 to 30°C/s, and in still another example, may be 35 to 45°C/s.

The cooling process following the continuous annealing may utilize conventional rapid cooling equipment and is not specifically limited; however, it should be noted that, as an example, rapid cooling equipment using mist or hydrogen may be used.

The cold-rolled steel sheet cooled to the-described temperature range may be maintained at a specific temperature to induce a bainite phase transformation at a target level. In this case, it may be reheated to a temperature slightly lower or slightly higher than the cooling temperature and then maintained. Alternatively, after introducing martensite by cooling to a temperature below Ms, tempered martensite and bainite may be obtained simultaneously by reheating to a temperature slightly higher than Ms. Considering this, in the method for manufacturing a cold-rolled steel sheet according to an example of the present disclosure, an over-aging process of 0.5 minutes or more may be performed in a temperature range of 300 to 550°C. During the over-aging process, when the temperature is below 300°C or the time is less than 0.5 minutes, carbon partitioning into retained austenite through sufficient carbon diffusion may not occur, and thus a sufficient retained austenite fraction may not be secured. Meanwhile, when the temperature exceeds 550°C, the bainite transformation is retarded, making it difficult to secure sufficient retained austenite, or, consequently, excessive formation of pearlite may occur, resulting in insufficient ductility. As another example, the temperature range during the over-aging process may be 380 to 400°C, and as still another example, it may be 400 to 420°C. Furthermore, although the present disclosure does not separately limit the upper limit of the holding time during the over-aging process, as an example, the over-aging may be performed for 100 minutes or less.

The cold-rolled steel sheet obtained by completing the series of processes according to the above description may be further subjected to the [hot-dip galvanizing - alloying heat treatment] process as needed.

First, the galvanized steel sheet having a plating layer on at least one surface may be manufactured by plating the cold-rolled steel sheet as described below.

### [Hot-dip Galvanizing]

The hot-dip galvanized steel sheet may be manufactured by immersing the steel sheet produced through the series of processes described above into a molten zinc plating bath.

In this case, the hot-dip galvanizing may be performed under normal conditions, but as an example, it may be performed in a temperature range of 450 to 500°C. Furthermore, the composition of the molten zinc-based plating bath during the hot-dip galvanizing is not particularly limited and may be a pure zinc plating bath or a zinc-based alloy plating bath containing Si, Al, Mg, etc.

### [Alloying Heat Treatment]

If necessary, the alloyed hot-dip galvanized steel sheet may be obtained by performing the alloying heat treatment on the hot-dip galvanized steel sheet.

In the present disclosure, the conditions for the alloying heat treatment process are not specifically limited, and ordinary conditions are acceptable. As an example, the alloying heat treatment process may be performed in a temperature range of 480 to 550°C.

Meanwhile, if necessary, after completing the alloying heat treatment, the temper rolling treatment may be further performed to correct the shape of the steel sheet and adjust the yield strength.

The temper rolling treatment may be performed by cooling the alloyed hot-dip galvanized steel sheet obtained by the alloying heat treatment to room temperature, and then performing rolling with a reduction ratio of less than 1%.

Hereinafter, the present disclosure will be described in more detail with reference to Examples. However, it should be noted that the following Examples are only for illustrating the present disclosure in more detail and are not intended to limit the scope of the present disclosure. This is because the scope of the present disclosure is determined by the matters described in the claims and the matters reasonably inferred therefrom.

### Mode for Invention

### (Example)

Steel slabs having the alloy compositions shown in Table 1 below were heated in a temperature range of 1100 to 1300°C, and then each cold-rolled steel sheet was manufactured through a [hot rolling - coiling and air cooling - cold rolling - annealing - cooling and holding] process according to the conditions shown in Tables 2 and 3 below.

The microstructure and physical properties of the cold-rolled steel sheet manufactured as described above were measured, and the results were shown in Tables 4 and 5 below.

In this case, the microstructure photograph of each steel sheet was observed using a scanning electron microscope (SEM), and then measured by a point counting method. However, the fraction of the retained austenite phase was measured by the XRD.

The tensile strength TS, yield strength YS, and elongation El of each steel sheet were evaluated by the tensile testing in a direction perpendicular to the rolling direction, and the specimen specification in which the gauge length is 50 mm and the width of the tensile specimen is 25 mm was used.

**[Table 1]**

| Steel grade | C | Si | Mn | P | S | Al | N | Cr | Ni | Mo | Nb | Ti | B |
|---|---|---|---|---|---|---|---|---|---|---|---|---|---|
| A | 0.11 | 1.5 | 1.6 | 0.007 | 0.00 2 | 0.00 3 | 0.00 9 | 0.5 | 0.0 2 | 0 | 0 | 0.02 3 | 0.001 5 |
| B | 0.14 6 | 1.6 3 | 1.2 7 | 0.00 6 | 0.00 1 | 0.00 3 | 0.00 8 | 0 | 0 | 0 | 0 | 0 | 0 |
| C | 0.22 | 0.4 5 | 1.5 | 0.00 7 | 0.00 2 | 0.75 | 0.00 9 | 0 | 0 | 0 | 0 | 0 | 0 |
| D | 0.22 3 | 1.6 9 | 1.5 7 | 0.00 6 | 0.00 3 | 0.03 0 | 0.00 9 | 0.5 | 0.0 2 | 0 | 0 | 0 | 0.002 |
| E | 0.25 | 1.5 | 1 | 0.01 | 0.00 2 | 0.03 | 0.00 8 | 0 | 0 | 0 | 0 | 0 | 0 |
| F | 0.2 | 0.5 3 | 1.8 3 | 0.00 6 | 0.00 3 | 0.03 0 | 0.00 9 | 0.0 1 | 0.1 1 | 0 | 0 | 0.02 5 | 0.001 7 |
| G | 0.22 | 1.5 | 2.3 | 0.00 6 | 0.00 3 | 0.04 5 | 0.00 9 | 0 | 0 | 0 | 0.0 2 | 0.01 5 | 0.002 |
| H | 0.19 | 1.4 | 2.7 | 0.00 6 | 0.00 3 | 0.03 3 | 0.00 9 | 0.0 2 | 0.0 2 | 0 | 0 | 0 | 0 |
| J | 0.28 | 2.1 | 2.3 | 0.00 6 | 0.00 3 | 1.03 | 0.00 9 | 0 | 0 | 0. 1 | 0 | 0 | 0 |
| K | 0.1 | 0.3 5 | 1.8 | 0.00 6 | 0.00 3 | 0 | 0.00 9 | 0 | 0 | 0 | 0 | 0 | 0 |
| L | 0.04 | 1.4 | 1.5 5 | 0.00 7 | 0.00 2 | 0.00 3 | 0.00 8 | 0 | 0 | 0 | 0 | 0.02 | 0.001 5 |

**[Table 2]**

| Division | Steel grade | FDT(°C) | Ms (°C) | Coiling temperature (°C) | Cold rolling reduction ratio (%) | Steel grade |
|---|---|---|---|---|---|---|
| Example 1 | A | 910 | 250 | 240 | 15.0 | GA |
| Comparative Example 1 | A | 899 | 250 | 150 | 50.0 | GA |
| Comparative Example 2 | A | 920 | 250 | 240 | 15.0 | GA |
| Example 2 | B | 930 | 395 | 290 | 24.0 | CR |
| Comparative Example 3 | B | 915 | 395 | 650 | 42.0 | CR |
| Comparative Example 4 | C | 910 | 403 | 365 | 29.8 | CR |
| Example 3 | D | 920 | 344 | 250 | 15.0 | CR |
| Comparative Example 5 | D | 900 | 344 | 510 | 10.0 | CR |
| Comparative Example 6 | D | 915 | 344 | 150 | 40.0 | CR |
| Example 4 | E | 910 | 372 | 240 | 12.0 | CR |
| Comparative Example 7 | E | 930 | 372 | 150 | 50.0 | CR |
| Example 5 | F | 900 | 365 | 305 | 10.0 | CR |
| Comparative Example 8 | G | 915 | 327 | 301 | 15.0 | CR |
| Comparative Example 9 | G | 920 | 327 | 330 | 21.0 | GI |
| Example 6 | H | 900 | 320 | 150 | 10.0 | CR |
| Example 7 | J | 890 | 321 | 185 | 12.5 | CR |
| Comparative Example 10 | K | 895 | 407 | 150 | 15.0 | CR |
| Comparative Example 11 | L | 900 | 428 | 340 | 15.0 | CR |

**[Table 3]**

| Division | Ae3 (°C) | Annealing temper ature (°C) | Cooling rate (°C) | Cooling stop temperature (°C) | Reheating temperature (°C) | GI FURNACE (°C) | GA heattreatment (°C) | Over-aging time (minute) |
|---|---|---|---|---|---|---|---|---|
| Example 1 | 882 | 780 | 12 | 400 | 400 | 490 | 510 | 3 |
| Comparative Example 1 | 882 | 780 | 11 | 400 | 400 | 480 | 530 | 4 |
| Comparative Example 2 | 882 | 780 | 4 | 400 | 400 | 470 | 510 | 6 |
| Example 2 | 886 | 820 | 11 | 350 | 440 | - | - | 5 |
| Comparative Example 3 | 886 | 820 | 15 | 350 | 440 | - | - | 20 |
| Comparative Example 4 | 896 | 870 | 20 | 400 | 400 | - | - | 10 |
| Example 3 | 845 | 840 | 21 | 400 | 400 | - | - | 4 |
| Comparative Example 5 | 845 | 840 | 12 | 400 | 400 | - | - | 15 |
| Comparative Example 6 | 845 | 840 | 13 | 400 | 400 | - | - | 14 |
| Example 4 | 859 | 840 | 11 | 200 | 300 | - | - | 30 |
| Comparative Example 7 | 859 | 840 | 12 | 200 | 300 | - | - | 13 |
| Example 5 | 806 | 800 | 15 | 360 | 450 | - | - | 62 |
| Comparative Example 8 | 824 | 810 | 20 | 610 | 590 | | - | 21.0 |
| Comparative Example 9 | 824 | 810 | 17 | 350 | 410 | 500 | - | 0.3 |
| Example 6 | 810 | 790 | 16 | 400 | 400 | - | - | 44 |
| Example 7 | 939 | 830 | 12 | 210 | 450 | - | - | 16 |
| Comparative Example 10 | 823 | 860 | 13 | 400 | 400 | - | - | 2 |
| Comparative Example 11 | 908 | 834 | 11 | 400 | 400 | 490 | 548 | 3 |

**[Table 4]**

| Division | Steel grade | Microstructure | | | | | |
|---|---|---|---|---|---|---|---|
| | | F (area%) | Retained γ (area%) | B (area%) | M (area%) | Remarks | Hard phase fraction (R) of 4.0 or more (%) |
| Example 1 | A | 52 | 5.6 | 41 | 1.4 | | 75.0 |
| Comparative Example 1 | A | 48 | 6.4 | 28 | 17.6 | | 21.0 |
| Comparative Example 2 | A | 64 | 4.8 | 4 | 11 | Retained perlite | 24.0 |
| Example 2 | B | 38 | 6.4 | 31 | 24.6 | | 67.5 |
| Compara tive Example 3 | B | 34 | 5.4 | 41 | 19.6 | | 21.0 |
| Compara tive Example 4 | C | 31 | 3.9 | 28 | 37.1 | | 41.0 |
| Example 3 | D | 41 | 15.6 | 34 | 9.4 | | 77.0 |
| Comparative Example 5 | D | 40 | 8.5 | 30 | 21.5 | | 25.0 |
| Comparative Example 6 | D | 37 | 7.6 | 30 | 25.4 | | 14.0 |
| Example 4 | E | 32 | 20.1 | 12 | 35.9 | | 71.0 |
| Comparative Example 7 | E | 30 | 9.4 | 30 | 30.6 | | 10.5 |
| Example 5 | F | 35 | 19.5 | 40 | 5.5 | | 72.0 |
| Comparative Example 8 | G | 48 | 1.4 | 21 | 3 | Balance : pearlite | 21.5 |
| Comparative Example 9 | G | 39 | 3.8 | 17 | 40.2 | | 48.0 |
| Example 6 | H | 31 | 17.5 | 38 | 13.5 | | 74.0 |
| Example 7 | J | 14 | 16.8 | 17 | 52.2 | | 65.0 |
| Comparative Example 10 | K | 41 | 6.8 | 30 | 22.2 | | 10.5 |
| Comparative Example 11 | L | 29 | 4.2 | 31 | 35.8 | | 54.0 |

**[Table 5]**

| Division | Physical Property | | | | |
|---|---|---|---|---|---|
| | YS (MPa) | TS (MPa) | T-El (%) | U-El (%) | TS x T-El (%MPa) |
| Example 1 | 510 | 610 | 42.0 | 23.0 | 25620 |
| Comparative Example 1 | 290 | 490 | 31.0 | 17.0 | 15190 |
| Comparative Example 2 | 310 | 520 | 32.5 | 21.6 | 16900 |
| Example 2 | 585 | 765 | 35.7 | 27.4 | 27311 |
| Comparative Example 3 | 432 | 647 | 28.0 | 19.0 | 18086 |
| Comparative Example 4 | 550 | 693 | 24.5 | 30.6 | 16979 |
| Example 3 | 715 | 826 | 36.4 | 26.3 | 30099 |
| Comparative Example 5 | 510 | 940 | 19.5 | 16.8 | 18330 |
| Comparative Example 6 | 598 | 920 | 21.0 | 17.5 | 19320 |
| Example 4 | 690 | 810 | 28.4 | 21.5 | 23004 |
| Comparative Example 7 | 424 | 728 | 19.6 | 14.3 | 14269 |
| Example 5 | 606 | 776 | 31.0 | 12.4 | 24045 |
| Comparative Example 8 | 585 | 1086 | 14.8 | 19.4 | 16073 |
| Comparative Example 9 | 554 | 1189 | 17.0 | 10.3 | 20213 |
| Example 6 | 798 | 1215 | 21.8 | 15.4 | 26487 |
| Example 7 | 910 | 1410 | 18.0 | 14.0 | 25380 |
| Comparative Example 10 | 480 | 755 | 17.0 | 12.0 | 12835 |
| Comparative Example 11 | 480 | 615 | 21.8 | 23.0 | 13407 |

As shown in Tables 1 to 5, Examples 1 to 7, which satisfy both the alloy composition system and the manufacturing conditions proposed in the present disclosure, exhibit a TS × T-El value exceeding 23,000 due to the formation of the microstructure proposed in the present disclosure, thereby simultaneously achieving high strength and excellent formability.

On the other hand, in Comparative Examples 1, 6, and 7, the cold rolling reduction ratio exceeded 31%, thereby destroying the initial martensitic structure and failing to obtain a sufficient acicular microstructure, resulting in difficulty in securing both excellent strength and ductility.

In Comparative Example 2, the cooling rate during cooling after annealing was applied as low as 4°C/s, thereby forming pearlite and failing to secure the sufficient fraction of retained austenite, resulting in inferior elongation.

In Comparative Examples 3 and 5, since the coiling temperature is higher than Ms or the cold rolling reduction ratio exceeds 31%, the acicular microstructure of the hard phase is not obtained, resulting in both strength and elongation being inferior.

In Comparative Example 4, although the manufacturing conditions were applied according to the method proposed in the present disclosure, the Si content was as low as 0.45% to limit the carbon partitioning in the over-aging region, thereby making it difficult to secure the sufficient fraction of retained austenite.

In Comparative Example 8, since the cooling temperature during the continuous annealing was 610°C and the reheating temperature was as high as 590°C, the residual pearlite was formed and the fraction of retained austenite was insufficient, resulting in inferior ductility.

In Comparative Example 9, since the over-aging heat treatment time during the continuous annealing was as short as 0.3 minutes, the excessive amount of fresh martensite was introduced during the cooling after the over-aging heat treatment, and the sufficient retained austenite was not secured, resulting in inferior elongation.

In Comparative Example 10, since the annealing temperature during the continuous annealing exceeded Ae3, the recrystallization was performed after the reverse transformation in the annealing heat treatment region to destroy the initial martensitic structure and as a result, the sufficient fraction of acicular hard phase was not secured, resulting in inferior elongation.

Comparative Example 11 was manufactured under the processing conditions proposed in the present disclosure; however, due to the low C content of 0.04%, the sufficient fraction of retained austenite could not be secured.

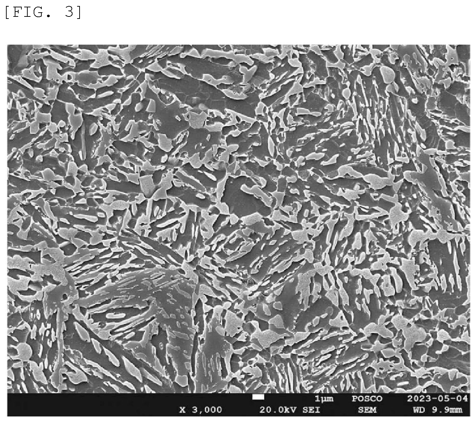

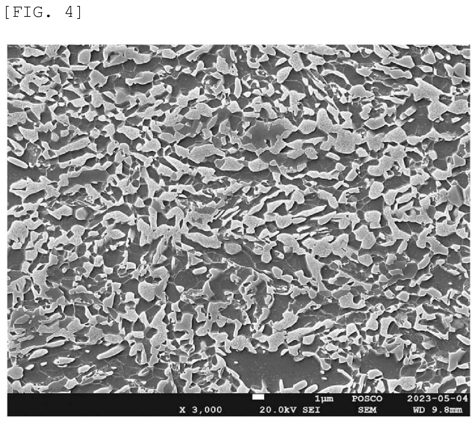

FIGS. 3 and 4 are SEM images showing the microstructures of Example 4 and Comparative Example 7, respectively. Referring to FIG. 3, in Example 4, the area fraction of the acicular hard phase having an R value of 4.0 or more, as derived by [Relational Equation 1], exceeded 60 area%, so it could be confirmed that the overall grain size is refined. On the other hand, referring to FIG. 4, in Comparative Example 7, the spherical hard phase is formed, which is disadvantageous for securing both the ductility and strength within the same composition system.

## Claims

1. A cold-rolled steel sheet, comprising:
by wt%, carbon (C): 0.080 to 0.30%, silicon (Si): 0.50 to 2.3%, aluminum (Al): 0.0030 to 2.0% or less, manganese (Mn): 1.0 to 3.5%, phosphorus (P): 0.0400% or less (excluding 0%), sulfur (S): 0.0100% or less (excluding 0%), and nitrogen (N): 0.01000% or less (excluding 0%), and a balance of Fe and unavoidable impurities,
wherein a microstructure includes 5 to 25 area% of retained austenite and 25 to 90% of a hard phase, with a balance of ferrite,
the hard phase includes at least one of bainite and martensite, and
an area fraction of the hard phase having an R value of 4.0 or higher derived by the following [Relational Equation 1] exceeds 60 area% with respect to a total area fraction of the hard phase. [Relational Equation 1] 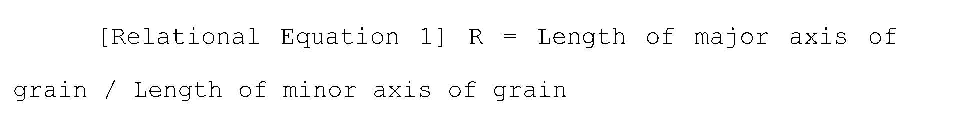 R = Length of major axis of grain / Length of minor axis of grain

2. The cold-rolled steel sheet of claim 1, wherein the steel sheet includes, by wt%, at least one of niobium (Nb), chromium (Cr), nickel (Ni), and molybdenum (Mo) in an amount of 2.0 wt% or less (excluding 0%).

3. The cold-rolled steel sheet of claim 1, wherein the steel sheet further includes at least one of titanium (Ti) of 0.050 wt% (excluding 0%) or less, and boron (B) of 0.003000 wt% or less (excluding 0%).

4. The hot-dip galvanized steel sheet according to any one of claims 1 to 3, wherein a zinc-based plating layer is formed on at least one surface of the cold-rolled steel sheet.

5. The alloyed hot-dip galvanized steel sheet according to any one of claims 1 to 3, wherein an alloyed zinc-based plating layer is formed on at least one surface of the cold-rolled steel sheet.

6. The cold-rolled steel sheet of any one of claims 1 to 3, wherein a tensile strength (TS) is 590 MPa or more, and a product TS x T-El of the tensile strength and total elongation is 23,000 or more.

7. A method for manufacturing a cold-rolled steel sheet, comprising:
heating a steel slab including, by wt%, carbon (C): 0.080 to 0.30%, silicon (Si): 0.50 to 2.3%, aluminum (Al): 0.0030 to 2.0% or less, manganese (Mn): 1.0 to 3.5%, phosphorus (P): 0.0400% or less (excluding 0%), sulfur (S): 0.0100% or less (excluding 0%), and nitrogen (N): 0.01000% or less (excluding 0%), and a balance of Fe and unavoidable impurities;
obtaining a hot-rolled steel sheet by finish hot rolling the steel slab after the heating;
after the finish hot rolling, coiling the hot-rolled steel sheet at a temperature of 100°C or higher and Ms or lower, and then air cooling the hot-rolled steel sheet;
cold rolling the hot-rolled steel sheet with a cumulative reduction ratio of 10% or more and 31% or less to obtain a cold-rolled steel sheet;
continuously annealing the cold-rolled steel sheet at a temperature of 750°C or higher and less than Ae3°C;
after the continuous annealing, cooling the cold-rolled steel sheet to a temperature range of 200 to 500°C at a cooling rate of 10°C/s or higher and 150°C/s or lower; and
reheating the cold-rolled steel sheet to 300 to 560°C and then performing over-aging heat treatment for 0.5 minutes or more.

8. The method for manufacturing a cold-rolled steel sheet of claim 7, wherein the steel slab includes, by wt%, at least one of niobium (Nb), chromium (Cr), nickel (Ni), and molybdenum (Mo) in an amount of 2.0 wt% or less (excluding 0%).

9. The method for manufacturing a cold-rolled steel sheet of claim 7, wherein the steel slab further includes at least one of titanium (Ti) of 0.050 wt% or less (excluding 0%), and boron (B) of 0.003000 wt% or less (excluding 0%).

10. The method for manufacturing a cold-rolled steel sheet of claim 7, wherein the heating is performed in a temperature range of 1100 to 1300°C, and
the finish hot rolling is performed in a temperature range of 850 to 1000°C.

11. The method for manufacturing a cold-rolled steel sheet of claim 7, wherein the over-ageing heat treatment is performed for 100 minutes or less.

12. The method for manufacturing a hot-dip galvanized steel sheet of any one of claims 7 to 11, further comprising:
after the over-aging heat treatment, immersing the cold-rolled steel sheet in a molten zinc plating bath at a temperature of 450 to 500°C to obtain a hot-dip galvanized steel sheet.

13. The method for manufacturing an alloyed hot-dip galvanized steel sheet of claim 12, further comprising:
performing alloying heat treatment on the hot-dip galvanized steel sheet at 480 to 550°C.

14. The method for manufacturing an alloyed hot-dip galvanized steel sheet of claim 13, further comprising:
after completing the alloying heat treatment, performing temper rolling.
